# EUROPÄISCHE PATENTSCHRIFT

(11) **EP 1 975 215 B1**
(45) Veröffentlichungstag und Bekanntmachung des Hinweises auf die Patenterteilung: **28.12.2011**
(21) Anmeldenummer: 07006413.4
(22) Anmeldetag: 28.03.2007
(51) Int. Cl.: C09D 183/06, C09D 201/02, C09D 201/10

(54) **Verfahren zum Ausbilden dünner flüssiger Schichten auf flexiblen Substraten aus Polymeren und/oder Metallen**
Method for forming thin liquid layers on flexible substrates made of polymers and/or metals
Procédé de formation de fines couches liquides sur des substrats flexibles en polymère et/ou métal

(43) Veröffentlichungstag der Anmeldung: 01.10.2008
(73) Patentinhaber: Andritz AG, 8045 Graz (AT)
(72) Erfinder: Stopperka, Prof. Dr. Klaus, 06849 Dessau (DE); Heydecker, Rudolf, 83313 Siegsdorf (DE); Schubert, Dr. Werner, 06846 Dessau (DE)
(74) Vertreter: Koepe & Partner

(56) Entgegenhaltungen:
- WO-A-02/40604
- WO-A-94/07965
- WO-A-03/063926
- DE-A1- 3 925 169
- US-A- 4 478 876

## Beschreibung

Die vorliegende Erfindung betrifft ein Verfahren zum Ausbilden dünner fester Schichten auf Substraten aus Polymeren und/oder Metallen bzw. Metall-Legierungen. Insbesondere betrifft die Erfindung ein Verfahren zum Ausbilden ultradünner fester Schichten auf flexiblen Substraten aus Polymeren und/oder Metallen bzw. Metall-Legierungen, worunter auch Substrate aus einem Verbund von einem oder mehreren Polymer(en) und einem oder mehreren Metall(en) bzw. Metall-Legierungen verstanden werden, durch Walzenantrag eines flüssigen Systems.

Das Walzenantragen von Beschichtungen auf Polymer- oder Metall-Oberflächen ist aus dem Stand der Technik bekannt. So beschreibt das Dokument US-A 4,478,876 ein Verfahren zum Aufbringen einer kratzbeständigen und dauerhaft haftenden Polyacrylatbeschichtung unter anderem mittels Walzenantrag auf ein festes Polymer-Substrat (Polycarbonat, Polyester, Polymethyl-(meth)-acrylat, Polyamid, Nylon) oder ein Metall-Substrat bzw. ein metallbeschichtetes Kunststoff-Substrat. Die Beschichtung wird durch UV-induzierte Polymerisation mindestens eines multifunktionalen Acrylatmonomers (polymerisationsfähiges Bindemittel), kolloidaler Kieselsäure (Silica) und mindestens eines acryloxyfunktionalisierten Silans und eines Photoinitiators aufgebracht, und organische Lösungsmittel (z.B. Alkohole) können dem Reaktionsansatz optional zugesetzt sein. Die Dicke der resultierenden Beschichtung liegt im Bereich von 0,05 bis 4 mm. Weiter offenbart Dokument DE-A 39 25 169 für Lötzwecke geeignete, elektroplattierte Stahlbleche, die mit einer Nachbehandlungslösung beschichtet werden. Hinsichtlich der Beschichtungsverfahren kommt u. a. auch eine Walzenbeschichtung in Betracht. Die Nachbehandlungslösung, die kein polymerisierbares Material ist, wird durch Trocknung entfernt, woraus Schichtdicken im getrockneten Zustand zwischen 0,01 bis 2 µm resultieren. Das Dokument WO 02/40,604 betrifft ein Verfahren zur Verringerung der Empfindlichkeit einer Metalloberfläche gegenüber Fingerabdrücken, bei dem die Fläche mit einer < 2 µm dicken Schicht eines Gemisches eines wasserlöslichen Polymers mit einer mindestens zwei Säuregruppen aufweisenden Verbindung versehen wird. Die Behandlung der Oberflächen kann unter anderem durch Walzen bei Temperaturen von etwa 15 bis etwa 80 °C durchgeführt werden. Die in dem Dokument WO 94/07,965 beschriebene Erfindung betrifft eine mittels Strahlung vernetzbare Beschichtung, umfassend einen kationisch reaktiven Polydiorganosiloxan-Flüssiggummi, der u. a. mittels Walzenantrag aufgetragen werden kann, mit organischen monovalenten Funktionsgruppen, umfassend mindestens eine kationische coreaktive Funktionsgruppe.

Polymer-Oberflächen, wie beispielsweise Polymer-Folien, oder mit Polymeren beschichtete andersartige Substrate wie beispielsweise mit einer oder mehreren Polymer-Folie(n) beaufschlagte Substrate, beispielsweise, aber nicht beschränkend, aus einem Metall oder einem Metallverbund oder einer Metall-Legierung, werden häufig mit einer funktionalisierenden Beschichtung versehen. Die funktionalisierende Oberflächen-Beschichtung verleiht der Polymer-Oberfläche eine neue, dem Substrat-Polymer nicht eigene Funktion (beispielsweise hydrophobe oder biozide Eigenschaften), was beispielsweise in der Verpackungsmittel-Industrie oder Druck-Industrie praktische Anwendung findet.

Für das Antragen bzw. Aufbringen funktionalisierender Oberflächen auf Substrate werden im Stand der Technik Bindemittel-Systeme eingesetzt, denen die funktionalisierende(n) Komponente(n) zugesetzt wird/werden. Dies erfordert immer eine Mindest-Schichtdicke, die sich aus der Natur des/der eingesetzten polymeren Bindemittel(s) ergibt, für den Verbund aus Bindemittel und funktionalisierende(n) Komponente(n). Ein solcher Verbund kann mittels herkömmlicher Verfahren wie Walzenantrag ("roll coating"), Sprühantrag ("spray coating") oder Rotationsantrag ("spin coating") auf das Substrat aufgebracht ("angetragen") werden. Die erreichbaren Schichtdicken (Trocken-Schichtdicke) liegen bei ≥ 5 µm.

Der Antrag von Schichten mit geringerer Dicke als 5 µm auf Polymer-Oberflächen oder mit Polymeren beschichteten Substraten bzw. Gegenständen erfolgt im Stand der Technik mit Verfahren der Vakuumbedampfung, insbesondere mittels CVD (chemical vapour deposition oder Gasphasenabscheidung unter Ablauf chemischer Prozesse) oder PVD (physical vapour deposition oder Gasphasenabscheidung unter Ablauf physikalischer Prozesse). Diese Verfahren sind jedoch in Fällen einer Funktionalisierung einer Polymer- bzw. Substrat-Oberfläche nur begrenzt verwendbar, da die funktionalisierenden Systeme verdampft werden müssen, um sich danach auf der Polymer- bzw. Substrat-Oberfläche abzuscheiden. Eine solche Verdampfung, meist unter Vakuum-Bedingungen, ist jedoch apparativ aufwendig (und damit teuer in der Durchführung) und ist in manchen Fällen aufgrund der chemischen Natur der aufzudampfenden Substanz(en) nicht oder nur eingeschränkt anwendbar.

Die Verfahrensweise, Schichten auf Polymer-Oberflächen oder mit Polymeren beschichtete Substrate bzw. Gegenstände durch Walzenantrag "anzutragen", existiert seit über 100 Jahren. Allerdings war anfänglich die Reproduzierbarkeit des Schichtenauftrags gering, und die Schichtdicke schwankte und lag im Bereich mehrerer Mikrometer. Im Rahmen der Fortentwicklung des Maschinenbaus wurden die mechanischen Parameter der Walzen zum Antrag der Polymer-Schichten und der Gegenwalzen, insbesondere die Rundlauf-Genauigkeit und die Dimensions-Toleranzen, schrittweise verbessert. Damit konnte im Laufe der Zeit eine zufriedenstellende Reproduzierbarkeit erreicht werden. Dadurch wird der Walzenantrag zu einer denkbaren Alternative bei der Generierung dünner Schichten auf Polymer-Oberflächen.

Der Einsatz von organischen polymeren Bindemitteln, wie beispielsweise von Polyester-, Polyurethan-, Gelatine-Bindemitteln, oder auch von aus Copolymeren verschiedener Polymere bestehenden Bindemitteln, führt aufgrund der Notwendigkeit, organischen Polymere mit langen Molekülketten und breiter Verteilung der Molekülketten einzusetzen, und der Notwendigkeit, dass die Polymer-Moleküle die funktionellen Wirkstoffe fixieren sollen, zu relativ hohen Schichtdicken. Wenn jedoch lediglich eine Funktionalisierung der Oberfläche des Basis-Polymers erreicht werden soll, hat eine hohe Schichtdicke den unnötigen Verbrauch von Wirkstoff zur Folge. Nachteiligerweise führt eine hohe Bindemittel-Schichtdicke auch zu einer Beeinflussung der Optik (Trübung und/oder Färbung) der erhaltenen funktionalisierten Schicht. Dies ist insbesondere bei solchen Polymer-Produkten nicht hinnehmbar, bei deren Anwendung es auf Klarheit, Transparenz und Farbtreue der Schicht auf der Polymer- bzw. Substrat-Oberfläche ankommt.

Die Druckschrift US-B 6,686,124 beschreibt Polymer-Materialien, die speziell im Hinblick auf ihre chemische Natur, ihre Löslichkeit, ihre optischen Eigenschaften, ihre thermischen Eigenschaften, ihre mechanischen Eigenschaften, ihre Selektivität beim Ätzen und ihr Filmbildungs-Vermögen durch Funktionalisieren der Polymer-Oberfläche maßgeschneidert werden können und dadurch optimierte Basen für Mehrschichten-Photoresists liefern können, die aktinischer Strahlung ausgesetzt werden.

Aufgabe der Erfindung war, ein Verfahren zum Antragen flüssiger Schichten auf flexible Substrate aus einem oder mehreren Polymer(en) und/oder einem oder mehreren Metall(en) durch Walzenantrag zur Verfügung zu stellen. Mit diesem Verfahren sollten auf flexiblen Substraten aus Polymer(en) und/oder Metall(en) funktionalisierte Schichten hoher Gleichmäßigkeit der Schichtdicke und hoher Gleichmäßigkeit der Funktionalität gebildet werden. Die Dicke der funktionalisierenden Schicht sollte aufgabengemäß im Bereich unter 700 nm liegen, vorzugsweise im Bereich unter 100 nm, und damit mit einem Minimum an Bindemittel auskommen. Aufgabe war weiter, die Schichtdicken hinsichtlich der zu erreichenden Funktion einstellbar zu gestalten.

Wie nun überraschend gefunden wurde, erfordert eine gute Funktionalisierung von flexiblen Oberflächen aus einem oder mehreren Polymer(en) und/oder aus einem oder mehreren Metall(en) und von Oberflächen von mit Polymer(en) beschichteten Substraten bzw. Gegenständen keine hohen Schichtdicken der funktionalisierenden Schicht. Vielmehr können für eine gute Funktionalisierung Schichtdicken bis hinab zu wenigen Nanometern ausreichend sein, wenn die auf das Polymer aufgebrachten Schichten gleichmäßig in ihrer Dicke und in der Ausprägung ihrer Funktionalität sind, also mit anderen Worten: bei gleichmäßigen Schichtdicken eine gleichmäßige Verteilung der Funktionalität an der Oberfläche und in der Schicht vorherrscht. Dies kann erfindungsgemäß erreicht werden durch einen Walzenantrag einer funktionalisierenden Schicht, die sich bei der Ausbildung der Schicht-Matrix selbst organisiert.

Die Erfindung betrifft daher ein Verfahren zum Ausbilden fester dünner Schichten einer Schichtdicke von 20 bis 700 nm auf einer flexiblen Substrat-Oberfläche aus einem oder mehreren Polymer(en) und/ oder einem oder mehreren Metall(en) mittels Walzenantrag eines flüssigen Systems, umfassend die Schritte, dass man eine Mischung aus einem für den Antrag geeigneten Lösungsmittel und einem oder mehreren aus der flüssigen Mischung zur Selbstorganisation befähigten, eine oder mehrere funktionalisierende Substanz(en) oder Gruppe(n) enthaltenden schichtbildenden polymerisationsfähigen Bindemittel(n) im Walzenantrag auf die flexible Substrat-Oberfläche in Form einer flüssigen Schicht anträgt, worin in der Mischung verwendet wird mindestens ein zur Selbstorganisation befähigtes, eine oder mehrere funktionalisierende Substanz(en) oder Gruppe(n) enthaltendes schichtbildendes polymerisationsfähiges Bindemittel, das gewählt ist aus der Gruppe, die besteht aus funktionalisierten Silanolen; oder
worin in der Mischung verwendet wird mindestens ein zur Selbstorganisation befähigtes schichtbildendes polymerisationsfähiges, gegebenenfalls modifiziertes Bindemittel, das gewählt ist aus der Gruppe gegebenenfalls modifizierter Silanole, zusammen mit einer eine oder mehrere funktionalisierende Gruppe(n) enthaltenden Substanz, die mit dem Silanol reaktiv ist;
- das Lösungsmittel aus der flüssigen Schicht entfernt; und
- das/die zur Selbstorganisation befähigte(n) Bindemittel zur Bildung einer festen dünnen Schicht auf der flexiblen Substrat-Oberfläche aus Polymer(en) und/ oder Metall(en) anregt, wobei die feste dünne Schicht die funktionalisierende(n) Substanz(en) oder Gruppe(n) umfasst.

Bevorzugte Ausführungsformen des erfindungsgemäßen Verfahrens sind in den abhängigen Ansprüchen 2 bis 12 beansprucht.

Die Erfindung wird nachfolgend unter Bezugnahme auf bevorzugte Ausführungsformen beschrieben, die jedoch keine Beschränkung der Erfindung darstellen, sondern lediglich der beispielhaften Erläuterung der Erfindung dienen. Insbesondere findet sich in der nachfolgenden detaillierten und beispielhaften Erläuterung der Erfindung auch eine Ausführungsform, die derzeit aus Sicht des Anmelders als die beste praktische Ausführungsform der Erfindung angesehen wird, jedoch ebenfalls die Erfindung nicht beschränkt, sondern sie beispielhaft erläutert.

Der Begriff "dünne Schichten", wie er in der vorliegenden Beschreibung und in den Patentansprüchen verwendet wird, bezieht sich allgemein in der Technik auf Schichten mit einer Dicke bis zu 700 nm, wird jedoch hier auch für Schichten verwendet, deren Dicke deutlich unter 700 nm liegt. Es ist gerade eines der besonderen Merkmale der Erfindung, dass sich durch das klassische Verfahren des Walzenantrags, das bequem durchzuführen ist und keiner aufwendigen technischen Anlagen bedarf, erfindungsgemäß Schichten einer Dicke auf Polymer-Oberflächen herstellen lassen, die aufgrund der Fähigkeit der Silanole zur Selbstorganisation bis hinab in den niedrigen Nanometer-Bereich geht. So werden als "dünne Schichten" solche Schichten des festen Polysiloxan mit funktionalisierenden Substanzen und/oder Gruppen auf der Polymer-Oberfläche verstanden, die eine Schichtdicke im Bereich von 20 bis 700 nm haben. Bevorzugte dünne Schichten mit funktionalisierenden Substanzen und/oder Gruppen haben eine Dicke im Bereich von 20 bis 100 nm.

Das erfindungsgemäße Verfahren betrifft die Ausbildung fester dünner Schichten auf einer Substrat-Oberfläche wie beispielsweise einer Polymer-Oberfläche und/oder Metalloberfläche. Insbesondere betrifft die Erfindung ein Verfahren zum Ausbilden ultradünner fester Schichten auf flexiblen Substraten aus Polymeren und/oder Metallen, worunter auch Substrate aus einem Verbund von einem oder mehreren Polymer(en) und einem oder mehreren Metall(en) verstanden werden. Polymere im Sinne der vorliegenden Erfindung sind makromolekulare Substanzen auf der Basis wiederkehrender Einheiten eines monomeren Molekül-Bausteins (Homopolymere) oder mehrerer monomerer MolekülBausteine (Copolymere), wobei Copolymere statistische Copolymere, alternierende Copolymere, Block-Copolymere oder Pfropf-Copolymere sein können. Hinsichtlich der Natur der Monomer-Bausteine unterliegt die vorliegende Erfindung keinen Beschränkungen, solange sich die aus diesen Bausteinen erhaltenen Polymere zu Gebilden mit Oberflächen verarbeiten lassen, die es im Rahmen der vorliegenden Erfindung zu modifizieren gilt, also beispielsweise zu Folien (oder Filmen), Körpern oder Gegenständen mit zu modifizierenden Oberflächen, oder Körpern oder Gegenständen (aus einem polymeren oder nichtpolymeren Material), auf deren Oberfläche ein Polymer aufgebracht ist oder werden soll, dessen Eigenschaft(en) zu modifizieren ist/sind. Nur beispielhaft werden als Polymere Polyolefine, Polyarylene, Polyester, Polyamide, Polyamine, Polyurethane, Polyether und Polycarbonate genannt, ohne die Erfindung auf diese zu beschränken.

Erfindungsgemäß werden die festen dünnen Schichten auf einer Substrat-Oberfläche wie einer Polymer-Oberfläche oder Metall-Oberfläche ausgebildet. Darunter wird in der Beschreibung und in den Patentansprüchen verstanden, dass die festen dünnen Schichten nur an dem Teil des Polymer-Materials bzw. Polymer-Material-Körpers oder des Metall-Materials oder Metall-Material-Körpers haften, der nach außen zeigt, nicht jedoch in das Polymer-Material oder Metall-Material eindringen. So werden die festen dünnen Schichten beispielsweise auf Polymer-Folien oder die Außenfläche von Substraten oder Gegenständen aufgebracht, die aus einem Polymer-Material bestehen oder zwar nicht aus einem Polymer-Material bestehen, jedoch auf ihrer Außenfläche ein Polymer-Material (beispielsweise einen dünnen Film oder eine Folie) aufgebracht aufweisen, oder die festen dünnen Schichten werden beispielsweise auf Metall-Folien oder die Außenfläche von Substraten oder Gegenständen aufgebracht, die aus einem Metall oder einer Metall-Legierung bestehen oder zwar nicht aus einem Metall-Material (einschließlich einer Metall-Legierung) bestehen, jedoch auf ihrer Außenfläche ein Metall-Material (beispielsweise einen dünnen Metall-Film oder eine Metall-Folie) aufgebracht aufweisen. Die erfindungsgemäß aufgebrachte feste dünne Schicht verleiht dann der Substrat-Oberfläche, beispielsweise der Polymer-Oberfläche bzw. Metall-Oberfläche, neue Eigenschaften oder eine neue Funktion.

In dem erfindungsgemäßen Verfahren erfolgt die Ausbildung der dünnen festen Schicht mittels Walzenantrag, also durch ein Verfahren, bei dem man die Substrat-Oberfläche wie beispielsweise die Polymer-Oberfläche oder Metall-Oberfläche der (im wesentlichen drucklosen) Berührung einer Antragswalze aussetzt, deren Oberfläche adhäsiv mit einer Flüssigkeit beaufschlagt wurde, die die aufzutragenden Komponenten enthält. Diese Flüssigkeit wird bei Berührung mit der Oberfläche der Antragswalze durch Adhäsion auf die Oberfläche des zu beschichtenden Substrats (also auf die Polymer-Oberfläche oder Metall-Oberfläche) übertragen. Vorteilhafterweise kann ein solcher Auftrag im Gegenstrom, also auch in Laufrichtung, erfolgen. Die Übertragung der Flüssigkeit von der Antragswalze auf das Substrat wird durch die Laufrichtung der Walzen und die Differenz der Geschwindigkeiten beider Walzen bestimmt. Die Oberfläche der Walzen kann glatt oder strukturiert sein.

Der Walzenantrag erfolgt erfindungsgemäß mit einem flüssigen System. Wie oben beschrieben, wird die Flüssigkeit über die Walzen-Oberfläche auf die Polymer-Oberfläche oder Metall-Oberfläche übertragen. Die Flüssigkeit umfasst erfindungsgemäß eine Mischung aus mehreren Komponenten. Eine der Komponenten ist ein für den Antrag, insbesondere den Walzenantrag, geeignetes Lösungsmittel. Im Rahmen der vorliegenden Beschreibung und in den Patentansprüchen wird unter "Lösungsmittel" nicht nur eine bei Raumtemperatur als Flüssigkeit vorliegende Verbindung zur Herstellung einer Lösung verstanden, sondern - breiter - eine Flüssigkeit, die als Vehikel für den Walzenantrag dienen kann und die festen Komponenten entweder im engeren Sinn löst oder - beispielsweise im Sinne einer kolloidalen Lösung oder eines Sols - dispergiert enthält. Selbstverständlich sind auch Mischformen denkbar. Erfindungsgemäß bevorzugt sind Mischsysteme aus Lösungsmittel und weiterer Komponente bzw. weiteren Komponenten in Form einer Lösung oder eines Sols.

In bevorzugten Ausführungsformen der Erfindung ist das Lösungsmittel gewählt aus der Gruppe, die besteht aus Wasser, Alkoholen mit 1 bis 6 Kohlenstoff-Atomen, Ketonen mit 1 bis 6 Kohlenstoff-Atomen (vorzugsweise) und deren Mischungen.

Als Alkohole können solche der vorgenannten Gruppe, also mit 1 bis 6 Kohlenstoff-Atomen, ohne Ausnahme infrage kommen. Die Alkohole können in der Alkyl-Kette geradkettig und verzweigt und cyclisch sein, und die HydroxyGruppe kann an beliebiger Stelle im Molekül gebunden sein. Es sind einwertige (Alkohole mit einer -OH-Gruppe) oder mehrwertige Alkohole (Alkohole mit mehreren -OH-Gruppen; Diole, Triole, Polyole) verwendbar. Einwertige Alkohole sind bevorzugt. Weiter bevorzugt sind erfindungsgemäß Methanol, Ethanol, n-Propanol, i-Propanol, n-Butanol, sec-Butanol und tert-Butanol. Es kann ein Alkohol verwendet werden, oder es können mehrere Alkohole verwendet werden.

Als Ketone können solche der vorgenannten Gruppe, also mit 1 bis 6 Kohlenstoff-Atomen, ohne Ausnahme infrage kommen. Die Ketone können in der Alkyl-Kette geradkettig und verzweigt und cyclisch sein, und die Carbonyl-Gruppe kann an beliebiger Stelle im Molekül gebunden sein. Bevorzugt sind Aceton, Methylethylketon, Cyclohexanon. Es kann ein Keton verwendet werden, oder es können mehrere Ketone verwendet werden.

Von den genannten Lösungsmitteln können einzelne für die Flüssigkeit für den Walzenantrag verwendet werden, oder es können mehrere Lösungsmittel verwendet werden. Zwei Lösungsmittel sind bevorzugt. Dabei müssen bei zwei oder mehreren Lösungsmitteln die einzelnen Lösungsmittel nicht derselben Gruppe entstammen, sondern es können auch Mischungen mehrerer (zweier, dreier, vierer....) Lösungsmittel verwendet werden. Das Lösungsmittel kann auch aus Wasser allein bestehen, oder Mischungen von Lösungsmitteln können Wasser umfassen. Das Verhältnis der verschiedenen Lösungsmittel in einer Mischung ist nicht beschränkt, und der Fachmann kann die Mischungen auf die gewünschten Zwecke nach bekannten und auch hier anwendbaren Kriterien abstimmen. Rein beispielhaft - und ohne jeglichen beschränkenden Charakter - werden als Lösungsmittel Ethanol oder Aceton oder eine Mischung aus Wasser und Ethanol oder eine Mischung aus i-Propanol und Wasser oder eine Mischung aus i-Propanol und Cyclohexanon oder eine Mischung aus i-Propanol und n-Butanol genannt.

Erfindungsgemäß ist Komponente der Mischung aus einem für den Antrag, insbesondere den Walzenantrag, geeigneten einen Lösungsmittel oder der mehreren Lösungsmittel und der weiteren Komponenten ein (oder sind mehrere) aus der flüssigen Mischung zur Selbstorganisation befähigte(s) schichtbildende(s) polymerisationsfähige(s) Silanol(e), die erfindungsgemäß eine oder mehrere funktionalisierende Substanz(en) oder Gruppe(n) enthalten. Derartige Silanole sind zur Polymerisation befähigte Substanzen, die einzeln oder mehrere in Kombination miteinander verwendet werden können. Sie sind zur Bildung einer Schicht, insbesondere einer dünnen, weiter bevorzugt einer ultradünnen Schicht nach Antrag, insbesondere nach Walzenantrag, auf der Substrat-Oberfläche wie beispielsweise auf einer Polymer- oder Metall-Folie oder auf der auf einem Gegenstand gebildeten Polymer- oder Metall-Schicht befähigt. Die erfindungsgemäßen Vorteile werden insbesondere mit solchen polymerisationsfähigen Silanolen einzeln oder in Kombination erzielt, die aus der flüssigen Mischung heraus zur Selbstorganisation befähigt sind. Unter dem Begriff "zur Selbstorganisation befähigt" wird in der vorliegenden Beschreibung und in den Patentansprüchen verstanden, dass sich die Substanz(en) unter Polymerisation und unter Zufuhr von Energie von außen zu einer dünnen (bis 700 nm), vorzugsweise einer ultradünnen (im Bereich von 20 nm bis 100 nm) Schicht mit hoher Gleichmäßigkeit der Dicke und der Funktionalität zusammenlagern können, wenn sie aus einem flüssigen System auf eine feste Substrat-Oberfläche wie beispielsweise einen Film aus einem Polymer oder einem Metall oder einen mit einem Polymer überzogenen oder mit einem Metall oder einer Metall-Legierung beschichteten Gegenstand aufgetragen werden.

In einer bevorzugten Ausführungsform der Erfindung ist die Mischung aus Lösungsmittel (im Sinne der obigen Definition) und der bei der Ausbildung einer Schicht zur Selbstorganisation befähigten Substanz eine Dispersion, beispielsweise Dispersionen von Silanolen (also Verbindungen des Siliciums, die neben organischen Resten R Oxo- und Hydroxy-Substituenten enthalten) in einem geeigneten Lösungsmittel (im Sinne der obigen Definition). Wird ein solches System auf eine Substrat-Oberfläche wie eine Polymer- oder Metall-Oberfläche oder einen Polymer- oder Metall-Film aufgetragen, bilden sich bei Energiezufuhr unter Selbstorganisation dünne Polysiloxan-Schichten im Bereich einer Dicke von 20 bis unter 700 nm, mit denen sich eine gute Funktionalisierung der Substrat-Oberfläche erzielen lässt.

Erfindungsgemäß weiter bevorzugt sind Systeme aus Lösungsmittel(n) (im obigen Sinn) und funktionalisierenden polymerisierbaren schichtbildenden Substanzen, die in flüssiger Phase in Form eines Sols vorliegen, also einer kolloidalen Lösung, in der das feste Silanol (oder auch mehrere feste Silanole) in feiner Verteilung in einer flüssigen Substanz (dem "Lösungsmittel") dispergiert ist/sind. Derartige Dispersionen umfassen im wesentlichen Gemische aus Wasser und organischen Lösungsmitteln, die bei Entzug des/der Lösungsmittel(s) in Gele übergehen, wobei formbeständige, nach wie vor Flüssigkeit(en) enthaltende Systeme in Form dünner Schichten mit gut verzweigten Feststoff-Strukturen entstehen.

Erfindungsgemäß ebenfalls bevorzugt sind auch vernetzbare Systeme, insbesondere solche Systeme, die bei Flüssigkeitsentzug infolge einer oder mehrerer chemischer Reaktion(en) Matrices aus dünnen Schichten bilden können. Eine derartige Vernetzung kann durch verschiedenste Reaktionsmechanismen initiiert werden, beispielsweise Zufuhr thermischer Energie, Einstrahlen aktinischer Strahlung (beispielsweise UV-Strahlung) oder Elektronenstrahlung. Die räumliche Anordnung der Matrix und ihr Aufbau, insbesondere die geringe Dicke der Matrix-Schicht, resultiert dabei direkt aus den chemischen Bindungen zwischen den beteiligten Reaktanden.

Eine bevorzugte Ausführungsform der Erfindung besteht in einem Verfahren, in dem in der Mischung mindestens ein zur Selbstorganisation befähigtes, eine oder mehrere funktionalisierende Substanz(en) oder Gruppe(n) enthaltendes schichtbildendes polymerisationsfähiges funktionalisiertes Silanol verwendet wird. Dies wird nachfolgend kurz als "Einkomponenten-System" bezeichnet. In einem alternativen Verfahren wird in der Mischung mindestens ein zur Selbstorganisation befähigtes schichtbildendes polymerisationsfähiges, gegebenenfalls modifiziertes Silanol, zusammen mit einer eine oder mehrere funktionalisierende Gruppe(n) enthaltenden Substanz, die mit dem Silanol reaktiv ist, verwendet. Dies wird nachfolgend kurz als "Zweikomponenten-System" bezeichnet.

In besonders bevorzugten Ausführungsformen der Erfindung ist das zur Selbstorganisation befähigte, eine oder mehrere funktionalisierende Substanz(en) oder Gruppe(n) enthaltende schichtbildende polymerisationsfähige Silanol, vorzugsweise in Wasser umfassender oder weiter bevorzugt sogar in ausschließlich wässriger Phase. Silanole sind für die erfindungsgemäßen Zwecke der Ausbildung von Schichten unter Selbstorganisation besonders gut geeignet, da sie einerseits besonders gut modifiziert werden können, sich andererseits aber auch unter Kondensation (also Abspaltung von Wasser) zu dreidimensionalen Polysiloxan-Systemen organisieren, die eine Ausbildung einer Polysiloxan-Schicht geringer, gleichmäßiger Dicke und gleichmäßiger Funktionalität garantieren.

Weiter bevorzugt ist es erfindungsgemäß, wenn das zur Selbstorganisation befähigte, schichtbildende polymerisationsfähige Silanol funktionalisiert ist. Eine solche Funktionalisierung kann erfindungsgemäß entweder in einem Einkomponenten-System oder in einem Zweikomponenten-System bestehen. Die Funktionalisierung wird nachfolgend beispielhaft erläutert.

Die Funktionalisierung im Einkomponenten-System erfolgt derart, dass als Silanol ein solches eingesetzt wird, bei dem am Silicium gebundene -OH-Gruppen bzw. -OR-Gruppen gegen eine funktionalisierende Gruppe X ausgetauscht sind. Die Reaktion folgt grundsätzlich dem Schema:

≡ Si - (OR) + (X) → ≡ Si - X + (OR)

worin das " ≡ " die drei Bindungen des Silicium-Atoms bedeuten, die nicht in die chemische Reaktion involviert sind, und "(X)" die modifizierende Gruppe bedeutet, die die -OR- bzw. (im Falle von R = H) die -OH-Gruppe am Si ersetzt. (Nicht beschränkende) Beispiele für modifizierende Gruppen sind AlkylGruppen mit 1 bis 6 Kohlenstoff-Atomen, von denen Methyl-Gruppen, Ethyl-Gruppen, n-Propyl-Gruppen, i-Propyl-Gruppen, n-Butyl-Gruppen, i-Butyl-Gruppen, sec-Butyl-Gruppen und tert-Butyl-Gruppen besonders bevorzugt sind; Alkenyl-Gruppen mit 2 bis 6 Kohlenstoff-Atomen, von denen Vinyl-Gruppen und Allyl-Gruppen besonders bevorzugt sind; Amino-Gruppen (die gegebenenfalls am Stickstoff-Atom mit einer oder zwei Alkylgruppen mit 1 bis 6 Kohlenstoff-Atomen oder Alkenyl-Gruppen mit 2 bis 6 Kohlenstoff-Atomen substituiert sein können), Thiol-Gruppen (die gegebenenfalls am Schwefel-Atom mit einer Alkylgruppe mit 1 bis 6 Kohlenstoff-Atomen oder Alkenyl-Gruppe mit 2 bis 6 Kohlenstoff-Atomen substituiert sein können), oder Epoxy-Gruppen mit 2 bis 6 Kohlenstoff-Atomen, vorzugsweise mit einer Ethylenoxy-Gruppe.

So können modifizierte Silanol-Komponenten im Sol-Zustand im Schritt des Antragens des Silanol-Systems auf die Substrat-Oberfläche als funktionalisierte Silanol-Systeme eingesetzt werden, die sich unter Ausbildung einer sehr dünnen Polysiloxan-Schicht selbst organisieren.

Die Funktionalisierung im Zweikomponenten-System erfolgt dadurch, dass im Silanol eine der am Silicium gebundenen -OH-Gruppen bzw. -OR-Gruppen durch eine funktionelle Gruppe ersetzt wird. Diese wird so gewählt, dass sie in der Lage ist, mit einem zweiten Molekül (der zweiten Komponente) unter Ausbildung einer kovalenten Bindung zu reagieren und dadurch eine Funktionalisierung zu erzeugen. Rein beispielhaft wird dies am Beispiel der Substitution einer am Silicium gebundenen -OR-Gruppe bzw. (im Falle von R = H) -OH-Gruppe durch eine Amino-Gruppe (-NH₂) und anschließende Reaktion mit Ethylenoxid als einer eine Epoxy-Gruppe enthaltenden zweiten Reaktionskomponente dargestellt, ohne dass die Erfindung auf diesen Weg der Modifikation in einem Zweikomponenten-System beschränkt ist: 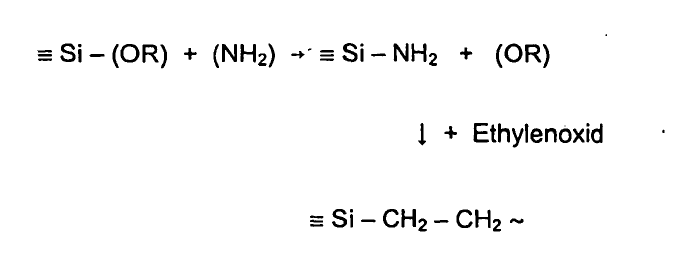 worin das " ≡ " die drei Bindungen des Silicium-Atoms bedeuten, die nicht in die chemische Reaktion involviert sind, und "∼" die für Folgereaktionen (beispielsweise Polymerisations-Reaktionen) zur Verfügung stehende reaktive Molekülstelle bedeutet.

Entsprechende Reaktions-Paare sind auch mit anderen organischen Molekülen durchführbar und resultieren in einer Funktionalisierung des organischen Polyorganosiloxans über die zweite Komponente. Auf diesem Wege lassen sich ebenfalls funktionalisierte Silanole erhalten, die zur Selbstorganisation befähigt sind und funktionalisierte dünne Schichten auf einer Substrat-Oberfläche wie z. B. einer Polymer- oder Metall-Folie oder einer Polymer- oder Metall-Oberfläche bilden.

Der Antrag (d. h. das Auftragen auf die Substrat-Oberfläche) der Silanole erfolgt erfindungsgemäß im Walzenantrag, wenn auch andere Verfahren des Aufbringens denkbar sind. Der Walzenantrag ist jedoch aufgrund der einfachen, schnellen und reproduzierbaren Verfahrensweise besonders bevorzugt. Der Antrag erfolgt in Form einer flüssigen Schicht direkt auf das Substrat. Der Walzenantrag erfolgt bevorzugterweise drucklos. Die angetragene Schicht haftet aufgrund von Adhäsion auf der Oberfläche der Antragswalze und wird bei Berührung auf das Substrat übertragen, wo sie ebenfalls aufgrund von Adhäsion haftet. Der Antrag erfolgt in Laufrichtung oder im Gegenstrom. Dabei wird die Übertragung von der Antragswalze auf das Substrat durch die Laufrichtung der Walzen und die Differenzgeschwindigkeit der Walzen bestimmt.

Erfindungsgemäß wird im nächsten Verfahrensschritt das Lösungsmittel aus der angetragenen flüssigen Schicht entfernt. Dies erfolgt nicht nur zum Zweck der Bildung einer festen Schicht, sondern auch zum Anregen bzw. Auslösen des Schritts der Selbstorganisation des Polysiloxan-Polymers unter Ausbildung einer sehr dünnen Schicht auf der Substrat-Oberfläche. Die Selbstorganisation wird durch die Polykondensation des modifizierten Polysiloxans im Einkomponenten-System bzw. die Polykondensation und gleichzeitige Polymerisation des modifizierten Polysiloxans im Zweikomponenten-System ausgelöst. Dazu ist das Silanol für die Polykondensation bzw. die kombinierte Polykondensation/Polymerisation ausreichend anzuregen bzw. zu aktivieren. Dies geschieht vorzugsweise thermisch durch Anheben der Temperatur, z. B. auf Werte im Bereich von 60 bis 150 °C, beispielsweise (aber nicht beschränkend) im Falle der Polyorganosiloxane auf einen Wert > 130 °C für die Polykondensation und auf einen Wert von > 80 °C für die Polymerisation. Bei diesen Bedingungen findet die Selbstorganisation unter Trocknen der dünnen Schicht statt: Es werden in einem Schritt sowohl das zum Antrag erforderliche Lösungsmittel (im obigen Sinn) als auch die bei der Polykondensation entstehenden Reaktionsprodukte (z. B. H₂O) abgeführt. Denkbar und als Alternative ebenfalls geeignet sind Verfahrensweisen zur Anregung unter Einstrahlung von aktinischer Strahlung, weiter bevorzugt von infraroter Strahlung, UV-Strahlung oder Elektronen-Strahlung, ein Belüften der angetragenen Schicht unter Anheben der Temperatur, oder auch Kombinationen der genannten Verfahrensweisen, entweder gleichzeitig oder nacheinander. Beispielsweise kann die angetragene dünne Schicht thermisch behandelt werden, wobei gleichzeitig das freiwerdende Lösungsmittel und gegebenenfalls flüchtige Reaktionsprodukte durch Belüften abgeführt und die Reaktion dadurch in die gewünschte Richtung gefördert wird.

Im Ergebnis erhält man polymere Polysiloxan-Schichten geringer Dicke, vorzugsweise mit einer Dicke im Bereich von 700 nm bis hinab zu 20 nm, weiter bevorzugt mit einer Dicke im Bereich von 20 nm bis 100 nm. Diese Bereiche stellen gegenüber früher erhaltenen Schichten eine Reduktion der Dicke um mehr als eine Zehnerpotenz dar.

Wesentlicher Vorteil gegenüber früher im Stand der Technik erhaltenen Schichten ist neben der einheitlichen (geringen) Dicke der Polysiloxan-PolymerSchicht auch die Gleichmäßigkeit der Funktionalisierung. So weisen in bevorzugten Ausführungsformen die mit dem Polysiloxan beaufschlagten PolymerSchichten eine Funktionalisierung in Form beispielsweise eine gleichmäßigen Hydrophobierung, Hydrophilierung, Oleophobierung oder Biozidierung auf.

Die Erfindung wird nun durch Beispiele näher erläutert. Es versteht sich, dass die Erfindung nicht auf die in den Beispielen genannten besonderen, rein erläuternden und nicht beschränkenden Ausführungsformen beschränkt ist.

### Beispiel 1

### Hydrophobierung einer Polymer-Oberfläche (Einkomponenten-System)

Ein mit einer Fluor-Verbindung modifiziertes Silanol wurde in Aceton bis zu einer Konzentration < 1 Gew.-% gelöst. Die Lösung wurde im Walzenantrag bei einem Walzenspalt von 50 µm und einem Verhältnis Geschwindigkeit Antragswalze / Geschwindigkeit Gegenwalze von 1,35 : 1 auf ein Substrat in Form einer Polymer-Folie aus PET aufgetragen. Der so hergestellte Verbund wurde im Durchlaufofen bei > 130 °C getrocknet. Es ergab sich eine hydrophobierte Polymer-Folie mit einer Dicke der Funktionalisierungsschicht im nm-Bereich. Angaben von Randwinkel-Messungen bestätigten die vorstehenden Aussagen.

### Beispiel 2

### Hydrophobierung einer Polymer-Oberfläche (Zweikomponenten-System)

Ein Amino-modifiziertes Silanol wurde in einem Gemisch aus Isopropanol und Cyclohexanon gelöst. Parallel dazu wurde das cycloaliphatische Epoxid in einem Gemisch aus Isopropanol und n-Butanol gelöst. Die beiden Lösungen wurden im Verhältnis 1 : 2,3 gemischt und mit Isopropanol auf eine Konzentration unter 1 Gew.-% verdünnt. Die Lösung wurde im Walzenantrag bei einem Walzenspalt von 50 µm und einem Verhältnis Geschwindigkeit Antragswalze / Geschwindigkeit Gegenwalze von 1,35 : 1 auf ein Substrat in Form einer Polymer-Folie aufgetragen. Der so hergestellte Verbund wurde im Durchlaufofen bei > 80 °C getrocknet. Es ergab sich eine hydrophobierte Polymer-Folie mit einer Dicke der Funktionalisierungsschicht, die im nm-Bereich lag.

## Patentansprüche

1. Verfahren zum Ausbilden fester dünner Schichten einer Schichtdicke im Bereich von 20 bis 700 nm auf einer Substrat-Oberfläche aus einem oder mehreren Polymer(en) und/ oder einem oder mehreren Metall(en) mittels Walzenantrag eines flüssigen Systems, umfassend die Schritte, dass man
- eine Mischung aus einem für den Antrag geeigneten Lösungsmittel und einem oder mehreren aus der flüssigen Mischung zur Selbstorganisation befähigten, eine oder mehrere funktionalisierende Substanz(en) oder Gruppe(n) enthaltenden schichtbildenden polymerisationsfähigen Bindemittel(n) im Walzenantrag auf die Substrat-Oberfläche in Form einer flüssigen Schicht anträgt,
■ worin in der Mischung verwendet wird mindestens ein zur Selbstorganisation befähigtes, eine oder mehrere funktionalisierende Substanz(en) oder Gruppe(n) enthaltendes schichtbildendes polymerisationsfähiges Bindemittel, das gewählt ist aus der Gruppe, die besteht aus funktionalisierten Silanolen; oder
■ worin in der Mischung verwendet wird mindestens ein zur Selbstorganisation befähigtes schichtbildendes polymerisationsfähiges gegebenenfalls modifiziertes Bindemittel, das gewählt ist aus der Gruppe gegebenenfalls modifizierter Silanole, zusammen mit einer eine oder mehrere funktionalisierende Gruppe(n) enthaltenden Substanz, die mit dem Silanol reaktiv ist;
- das Lösungsmittel aus der flüssigen Schicht entfernt; und
- das/die zur Selbstorganisation befähigte(n) Bindemittel zur Bildung einer festen dünnen Schicht auf der Substrat-Oberfläche aus Polymer(en) und/ oder Metall(en) anregt, wobei die feste dünne Schicht die funktionalisierende(n) Substanz(en) oder Gruppe(n) umfasst.

2. Verfahren nach Anspruch 1, worin die Mischung aus Lösungsmittel und einem oder mehreren aus der flüssigen Mischung zur Selbstorganisation befähigten, eine oder mehrere funktionalisierende Substanz(en) oder Gruppe(n) enthaltenden schichtbildenden polymerisationsfähigen Bindemittel(n) eine Lösung oder ein Sol ist.

3. Verfahren nach Anspruch 1 oder Anspruch 2, wobei das Lösungsmittel gewählt ist aus der Gruppe, die besteht aus Wasser; Alkoholen mit 1 bis 6 Kohlenstoff-Atomen, vorzugsweise Ethanol, n-Propanol, i-Propanol, n-Butanol, sec-Butanol, tert.-Butanol; Ketonen mit 1 bis 6 Kohlenstoff-Atomen, vorzugsweise Aceton, Methylethylketon, Cyclohexanon, und deren Mischungen.

4. Verfahren nach einem der Ansprüche 1 bis 3, worin das/die Silanol(e) (eine) funktionalisierende Substanz(en) oder Gruppe(n) enthält/enthalten oder die funktionalisierende Substanz oder Gruppe eine oder mehrere Gruppen umfasst/umfassen, die gewählt ist/sind aus Alkylgruppen mit 1 bis 6 Kohlenstoff-Atomen, Alkenyl-Gruppen mit 2 bis 6 Kohlenstoff-Atomen und einer oder zwei C-C-Mehrfachbindungen, gegebenenfalls Alkyl- oder Alkenyl-substituierten Aminogruppen, Epoxy-Gruppen mit zwei bis 6 Kohlenstoff-Atomen und gegebenenfalls Alkyl- oder Alkenyl-substituierten Thio-Gruppen.

5. Verfahren nach einem der Ansprüche 1 bis 4, worin das Lösungsmittel entfernt wird durch Erwärmen auf eine Temperatur im Bereich von 60 bis 150 °C.

6. Verfahren nach einem der Ansprüche 1 bis 4, worin das Lösungsmittel entfernt wird durch infrarote Strahlung.

7. Verfahren nach einem der Ansprüche 1 bis 4, worin das Lösungsmittel entfernt wird durch Belüften.

8. Verfahren nach einem der Ansprüche 1 bis 7, worin die Selbstorganisation des/der eine oder mehrere funktionalisierende Substanz(en) oder Gruppe(n) umfassenden Bindemittel(s) erfolgt durch Polykondensation, Polymerisation oder Sol-Gel-Übergang.

9. Verfahren nach einem der Ansprüche 1 bis 8, worin man die Selbstorganisation des/der Bindemittel(s) initiiert durch Erwärmen auf eine Temperatur im Bereich von 60 bis 150 °C.

10. Verfahren nach einem der Ansprüche 1 bis 8, worin man die Selbstorganisation des/der Bindemittel(s) initiiert durch Einstrahlen von infraroter Strahlung.

11. Verfahren nach einem der Ansprüche 1 bis 8, worin man die Selbstorganisation des/der Bindemittel(s) initiiert durch Belüften.

12. Verfahren nach einem der Ansprüche 1 bis 11, worin man eine Schichtdicke der festen dünnen Schicht im Bereich von 20 bis 100 nm, ausbildet.

## Claims

1. Process for forming solid thin layers of a layer thickness in the range of 20 to 700 nm on a substrate surface made of one or more polymers and/or one or more metals by roll coating of a liquid system, comprising the steps that
• a mixture comprising a solvent suitable for coating and one or more layer-forming polymerisable binders enabled for self-organisation from the liquid mixture containing one or more functionalising substances or groups is applied to the substrate surface in the form of a liquid layer in the roll coating,
• wherein at least one layer-forming polymerisable binder enabled for self-organisation containing one or more functionalising substances or groups selected from the group comprising functionalised silanols is used in the mixture; or
• wherein at least one layer-forming polymerisable, possibly modified binder enabled for self-organisation selected from the group comprising possibly modified silanols, together with a substance that contains one or more functionalising groups and is not reactive with the silanol are used in the mixture;
• the solvent is removed from the liquid layer; and
• the binder or binders enabled for self-organisation is/are stimulated to form a solid thin layer on the substrate surface of polymer(s) and/or metal(s), wherein the solid thin layer comprises the functionalised substance(s) or group(s).

2. Process according to claim 1, wherein the mixture comprising solvent and one or more layer-forming polymerisable binders enabled for self-organisation containing one or more functionalising substances or groups is a solution or a sol.

3. Process according to claim 1 or claim 2, wherein the solvent is selected from the group comprising water, alcohols with 1 to 6 carbon atoms, preferably ethanol, n-propanol, i-propanol, n-butanol, sec-butanol, tert.-butanol; ketones with 1 to 6 carbon atoms, preferably acetone, methyl ethyl ketone, cyclohexanone, and mixtures thereof.

4. Process according to one of claims 1 to 3, wherein the silanol(s) contain(s) (a) functionalising substance(s) or group(s) or the functionalising substance or group comprise(s) one or more groups selected from alkyl groups with 1 to 6 carbon atoms, alkenyl groups with 2 to 6 carbon atoms and one or two C-C multiple bonds, possibly alkyl- or alkenyl-substituted amino groups, epoxy groups with two to 6 carbon atoms and possibly alkyl- or alkenyl-substituted thio groups.

5. Process according to one of claims 1 to 4, wherein the solvent is removed by heating to a temperature in the range of 60° to 150°C.

6. Process according to one of claims 1 to 4, wherein the solvent is removed by infrared radiation.

7. Process according to one of claims 1 to 4, wherein the solvent is removed by aeration.

8. Process according to one of claims 1 to 7, wherein the self-organisation of the binder(s) comprising one or more functionalising substances or groups occurs by polycondensation, polymerisation or sol-gel transfer.

9. Process according to one of claims 1 to 8, wherein the self-organisation of the binder(s) is initiated by heating to a temperature in the range of 60° to 150°C.

10. Process according to one of claims 1 to 8, wherein the self-organisation of the binder(s) is initiated by irradiation of infrared radiation.

11. Process according to one of claims 1 to 8, wherein the self-organisation of the binder(s) is initiated by aeration.

12. Process according to one of claims 1 to 11, wherein a layer thickness of the solid thin layer is configured in the range of 20 to 100 nm.

## Revendications

1. Procédé pour développer des minces couches solides possédant une épaisseur de couche dans la plage de 20 à 700 nm sur une surface faisant office de substrat constituée par un ou plusieurs polymères et/ou par un ou plusieurs métaux, au moyen d'une déposition d'un système liquide à l'aide d'un cylindre, comprenant les étapes dans lesquelles :
- on dépose un mélange constitué par un solvant approprié pour la déposition et par un ou plusieurs liants stratificateurs, aptes à une polymérisation, contenant une ou plusieurs substances ou un ou plusieurs groupes fonctionnalisants capables d'une auto-organisation à partir du mélange liquide, via la déposition à l'aide d'un cylindre, sur la surface faisant office de substrat, sous la forme d'une couche liquide ;
- dans lequel, dans le mélange, on utilise au moins un liant stratificateur, apte à une polymérisation, contenant une ou plusieurs substances ou un ou plusieurs groupes fonctionnalisants capable d'une auto-organisation, qui est choisi parmi le groupe qui est constitué par des silanols fonctionnalisés ; ou bien
- dans lequel, dans le mélange, on utilise au moins un liant stratificateur, apte à une polymérisation, capable d'auto-organisation, le cas échéant modifié, qui est choisi parmi le groupe des silanols le cas échéant modifiés, conjointement avec une substance contenant un ou plusieurs groupes fonctionnalisants, qui est à même de réagir avec le silanol ;
- on élimine le solvant de la couche liquide ; et
- on excite le/les liants aptes à une auto-organisation pour la formation d'une mince couche solide sur la surface faisant office de substrat constituée par un ou plusieurs polymères et/ou par un ou plusieurs métaux, la mince couche solide comprenant la/les substances ou le/les groupes fonctionnalisants.

2. Procédé selon la revendication 1, dans lequel le mélange constitué par un solvant et par un ou plusieurs liants stratificateurs, aptes à une polymérisation, contenant une ou plusieurs substances ou un ou plusieurs groupes fonctionnalisants, capables d'une auto-organisation à partir du mélange liquide, est une solution ou un sol.

3. Procédé selon la revendication 1 ou 2, dans lequel le solvant est choisi parmi le groupe qui est constitué par de l'eau, des alcools contenant de 1 à 6 atomes de carbone, de préférence l'éthanol, le n-propanol, l'isopropanol, le n-butanol, le sec-butanol, le tert-butanol ; des cétones contenant de 1 à 6 atomes de carbone, de préférence l'acétone, la méthyléthylcétone, la cyclohexanone, ainsi que leurs mélanges.

4. Procédé selon l'une quelconque des revendications 1 à 3, dans lequel le/les silanols contient/contiennent une ou plusieurs substances ou un ou plusieurs groupes fonctionnalisants ou bien la substance ou le groupe fonctionnalisant comprend un ou plusieurs groupes qui sont choisis parmi des groupes alkyle contenant de 1 à 6 atomes de carbone, des groupes alcényle contenant de 2 à 6 atomes de carbone et une ou deux multiples liaisons C-C, des groupes amino éventuellement substitués par un ou plusieurs groupes alkyle ou alcényle, des groupes époxy contenant de 2 à 6 atomes de carbone et des groupes thio éventuellement substitués avec un ou plusieurs groupes alkyle ou alcényle.

5. Procédé selon l'une quelconque des revendications 1 à 4, dans lequel on élimine le solvant par chauffage à une température dans la plage de 60 à 150 °C.

6. Procédé selon l'une quelconque des revendications 1 à 4, dans lequel on élimine le solvant par exposition à un rayonnement infrarouge.

7. Procédé selon l'une quelconque des revendications 1 à 4, dans lequel on élimine le solvant par ventilation.

8. Procédé selon l'une quelconque des revendications 1 à 7, dans lequel l'auto-organisation du/des liants comprenant une ou plusieurs substances ou un ou plusieurs groupes fonctionnalisants a lieu par polycondensation, par polymérisation ou par transfert sol-gel.

9. Procédé selon l'une quelconque des revendications 1 à 8, dans lequel on déclenche l'auto-organisation du/des liants par chauffage à une température dans la plage de 60 à 150 °C.

10. Procédé selon l'une quelconque des revendications 1 à 8, dans lequel on déclenche l'auto-organisation du/des liants par radiation incidente d'un rayonnement infrarouge.

11. Procédé selon l'une quelconque des revendications 1 à 8, dans lequel on déclenche l'auto-organisation du/des liants par ventilation.

12. Procédé selon l'une quelconque des revendications 1 à 11, dans lequel on obtient une épaisseur de couche pour la mince couche solide dans la plage de 20 à 100 nm.
